# EUROPEAN PATENT SPECIFICATION

(11) **EP 3 995 713 B1**
(45) Date of publication and mention of the grant of the patent: **19.04.2023**
(21) Application number: 21020534.0
(22) Date of filing: 29.10.2021
(51) Int. Cl.: F16C 29/00, B65G 39/20

(54) **TRANSPORT SYSTEM HAVING A CARRIAGE WITH SELF-ADJUSTING BEARINGS**
TRANSPORTSYSTEM MIT EINEM WAGEN MIT SELBSTJUSTIERENDEN LAGERN
SYSTÈME DE TRANSPORT COMPORTANT UN CHARIOT AYANT DES ROULEMENTS AUTO-AJUSTABLES

(30) Priority: 06.11.2020 GB 202017545
(43) Date of publication of application: 11.05.2022
(73) Proprietor: Hepco Slide Systems Limited, Tiverton, Devon EX16 6TG (GB)
(72) Inventor: Forster, Gervase Leslie, Tiverton, Devon EX16 6TG (GB); Rendall, Steven Philip, Tiverton, Devon EX16 6TG (GB)
(74) Representative: Craske, Stephen Allan

(56) References cited:
- EP-A1- 3 476 773
- WO-A1-2019/241240
- US-A- 3 259 021
- US-A- 3 774 548
- US-A1- 2019 148 923

## Description

### TECHNICAL FIELD OF THE INVENTION

This invention relates to transport systems which include a track and carriages with bearings to engage profiles on opposite sides of the track.

### BACKGROUND

In transport systems which include both straight and curved sections of track the width is normally constant throughout the straight and curved sections, it is common to use a carriage having four bearings with centres located on a trapezium, with the dimensions carefully calculated to provide a best fit when the carriage is wholly on the straight and wholly on the curved sections. As these carriages traverse between straight track and curve the fit on the track becomes looser, often resulting in a clearance condition. This clearance condition is undesirable, and becomes less acceptable the larger the track systems are. Due these clearances it is likely that the dimensional stability of the carriage will be altered. In some products it is very important that the carriage remains stable around the entire track system, maintaining clearances and controlling air gaps.

Furthermore, although systems which just contain a straight tracks, or circular tracks formed with arc segments, do not have the same transitions they are still subject to differences in manufacturing tolerances, which means that standard carriages have to be manually re-set to make allowance for these differences. Also, over the lifetime of any track system fitted with carriages the track itself will be subject to wear. Consequently, the carriages may become loose and dimensionally unstable, which has to be addressed by manually resetting the carriage. In systems with a large number of carriages this will take time and may need to be performed a number of times over the lifetime of the track system.

In transport systems in which a load is suspended from carriages having driven wheels which engage upper and/or lower faces of the track it is known to use spring-loaded wheels or rollers to maintain frictional drive as the carriages travel along the track. For example, in EP 354 461-A1 rollers are urged by compression springs into engagement with a lower flange of an I-beam track while a drive wheel engages the upper face of the I-beam. Also, in US 3 774 548 a driven roller is held in engagement with a lower face of the track by a spring-loaded pivot arm. With both of these known arrangements the springs exert a limited amount of force which would be insufficient to ensure that in larger track systems with heavier carriages and loads a constant clearance and dimensional stability will be maintained. This is particularly relevant in transport systems in which all or part of the track is disposed in a horizontal plane. Furthermore, such spring-loading arrangements require a substantial overhang on one side of the carriage which may further prejudice the potential stability of the transport system.

A further prior art document, US 3 259 021 A1, discloses a transport system comprising a track, a carriage having a carriage body, a fixed bearing arrangement which includes a bearing to engage the track, and a self-adjusting bearing arrangement which includes a movable bearing to engage a second side of the track and which is mounted on a pivot arm having a bias element.

### SUMMARY OF THE INVENTION

When viewed from one aspect the present invention proposes a transport system:
a track (1) having a top face (8) and opposite first and second sides (9, 10); a carriage (11) having a carriage body (12) to extend across the top face of the track, a fixed bearing arrangement (14) which includes a bearing (15a, 15b) to engage the first side of the track and having a rotational axis located in a fixed position on the carriage body, and a self-adjusting bearing arrangement (19) which includes a movable bearing (20) to engage the second side of the track and mounted on a pivot arm (21) having a pivotal connection (24, 25) with the carriage body and a bias element (45) arranged to act on the pivot arm such as to maintain contact between the movable bearing and the second side of the track;
wherein the self-adjusting bearing arrangement (19) is such that
- the movable bearing (20) is not driven;
- the movable bearing (20) and the pivotal connection (24, 25) of the pivot arm (21) are both located at a first end of the pivot arm;
- the bias element (45) is spaced from the pivotal connection (24, 25) of the pivot arm (21) in a first direction;
- the movable bearing (20) is offset from the pivotal connection (24, 25) in a second direction which is transverse to the first direction.

In a preferred embodiment the second direction is substantially orthogonal to the first direction.

In a preferred embodiment the bias element (45) acts to urge the pivot arm (21) in a direction which is opposite to the direction in which the movable bearing (20) is offset from the pivotal connection (25, 25).

In a preferred embodiment the distance A between the bias element (45) and the pivot axis (y1) of the pivot arm (21) is greater than the distance B between the rotation axis (y2) of the bearing (20) and the pivot axis (y1). Distance A is preferably greater than twice distance B, more preferably greater than three times, and most preferably greater than five times distance B.

In a preferred embodiment an adjustable closing stop (46) is provided to limit pivotal movement of the movable bearing (20) towards the fixed bearing arrangement (14).

In a preferred embodiment an adjustable opening stop (47) provided to limit pivotal movement of the movable bearing (20) away from the fixed bearing arrangement (14).

In a preferred embodiment the bias element (45) is positioned on the same side of the pivot arm (21) as the movable bearing (20). The bias element (45) preferably comprises a compression spring which is carried on a guide pin (44).

In a preferred embodiment the bias element (45) acts against an adjustable stop (51) to vary the pre-loading of the bias element.

In one embodiment the self-adjusting bearing arrangement (19) includes a single movable bearing (20) mounted on a pivot arm (21) with a bias element (45).

In another embodiment the self-adjusting bearing arrangement (19) includes a pair of movable bearings (20a, 20b) mounted on respective pivot arms (21a, 21b) with respective bias elements (45). In a preferred configuration the two pivot arms (21a, 21b) are opposite-handed.

### BRIEF DESCRIPTION OF THE DRAWINGS

The following description and the accompanying drawings referred to therein are included by way of non-limiting example in order to illustrate how the invention may be put into practice. In the drawings:
Figures 1a and 1b are general views of a transport systems which includes a three-bearing carriage;
Figure 2 is an exploded view of a three-bearing carriage which can be used in the transport system;
Figure 3 is a top view of a pivot arm for the carriage of Fig. 2;
Figure 4 is a side view of the pivot arm;
Figure 5 is an end view of the pivot arm;

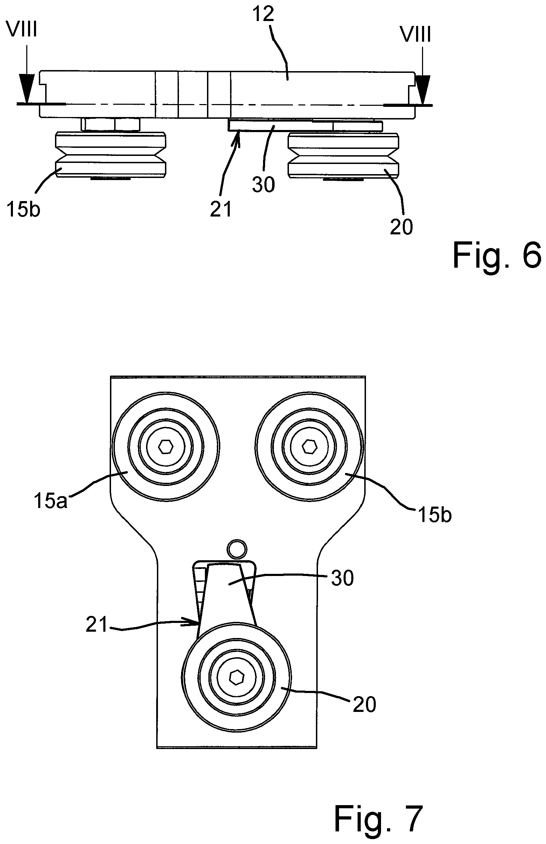

Figure 6 is a side view of a three-bearing carriage incorporating the pivot arm;
Figure 7 is a bottom view of the three-bearing carriage;

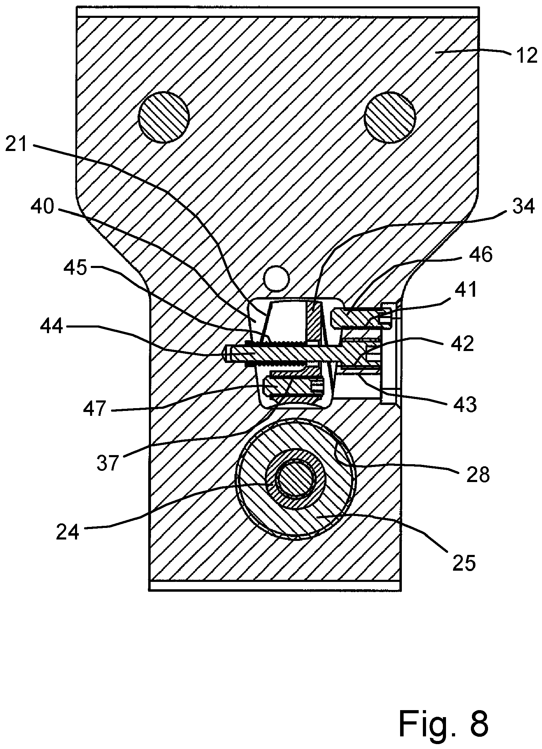

Figure 8 is section VIII-VIII of Fig. 6;
Figure 9 is a cross-sectional view similar to Fig. 8 showing the bearing wheels at their minimum set spacing;
Figure 10 is a cross-sectional view similar to Fig. 8 showing the bearing wheels at their maximum set spacing;
Figure 11 is a cross-sectional view similar to Fig. 8 showing the bearing wheels locked at their maximum spacing;
Figure 12 is a cross-sectional view similar to Fig. 8 showing the bearing wheels locked at their minimum spacing;
Figure 13 is a cross-sectional view similar to Fig. 8 showing a modified set screw configuration;
Figure 14 is a general view of a transport system which includes a four-bearing carriage;
Figure 15 is a side view of a four-bearing carriage which can be used in the transport system;
Figure 16 is a bottom view of the four-bearing carriage;
Figure 17 is section XVII-XVII of Fig. 15.

### DETAILED DESCRIPTION OF THE DRAWINGS

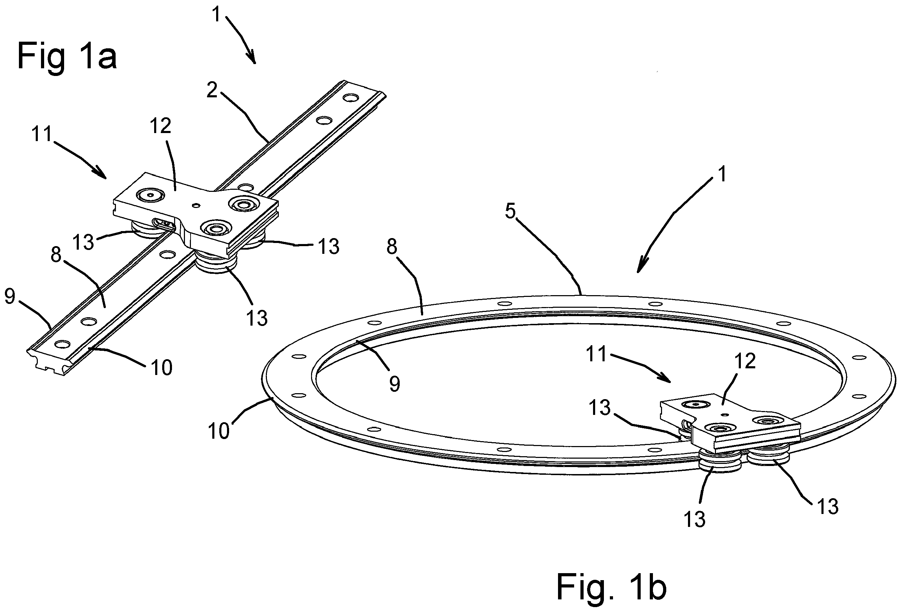

**Fig.s 1a and 1b** show transport systems with simple layouts for convenience of illustration. **Fig. 1a** shows a track 1 which includes a straight section 2 and **Fig. 1b** shows a circular track 1 which includes curved sections 5. Each track 1 has a top face 8 and opposite first and second sides 9 and 10. The width of the track between the sides 9 and 10 may be constant throughout the straight and curved sections or it may vary for various reasons as discussed herein. The transport system includes at least one a carriage 11, which in this example is a three-bearing carriage having a carriage body 12 and three bearing wheels 13. The carriage body 12 extends across the top face 8 of the track and the bearing wheels 13 are engaged with suitable profiles formed on the first and second sides 9 and 10. Triangular-section profiles are generally used, but others are possible. The carriage body 12 projects by substantially the same distance on opposite sides of the track. In the drawing the track 1 is shown in a horizontal orientation, but, depending on the use, at least part of the track could be arranged in a vertical plane.

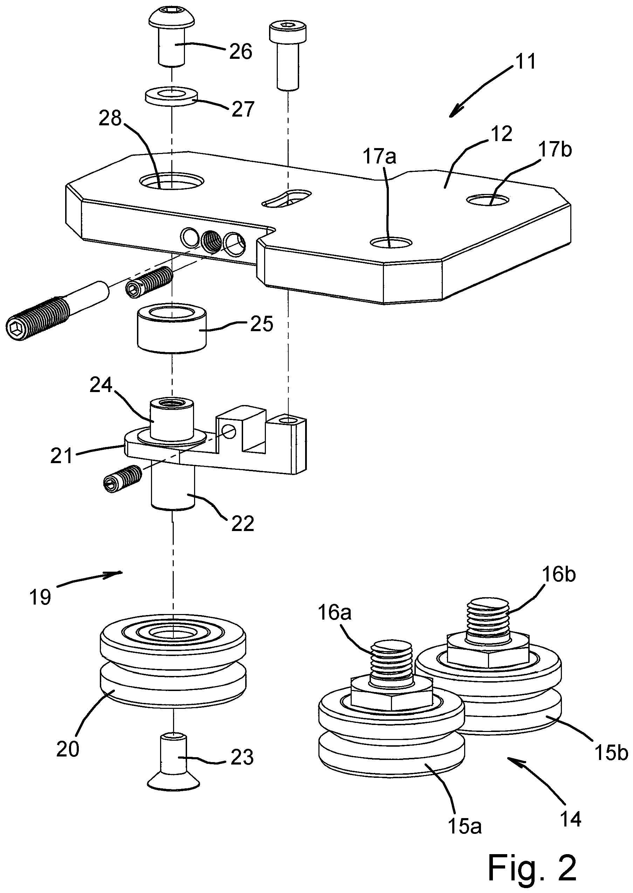

**Fig. 2** shows an example of a three-bearing carriage which may be used in the transport system of **Fig. 1****.** The carriage body 12 is a flat metal plate, which in the three-bearing carriage shown is generally T-shaped. One end of the plate is provided with a fixed bearing arrangement 14 which includes two fixed bearing wheels 15a and 15b to engage the first side of the track. These bearing wheels have respective mounting screws 16a and 16b which are received in threaded holes 17a and 17b so that their rotational axes are in fixed positions on the carriage body 12. The opposite end of the plate is provided with a self-adjusting bearing arrangement 19 which includes a single movable bearing wheel 20 to engage the second side of the track. This bearing wheel 20 is rotatably mounted on an internally screw-threaded bearing spigot 22 which is carried by a pivot arm 21, the bearing wheel 20 being retained on the spigot 22 by a screw 23. The pivot arm 21 also carries a further internally screw-threaded spigot 24 which provides a pivotal connection with the carriage body 12 via a bearing bush 25 which is received in an aperture 28 in the carriage body 12. The spigot 24 is pivotally secured by a further retaining screw 26 and washer 27. As explained below, a bias element such as a compression spring (not shown) is arranged to act on the pivot arm 21 such as to maintain contact between the movable bearing wheel 20 and the second side of the track.

A preferred form of the pivot arm 21 is shown in **Fig.s 3-5****.** The pivot arm comprises an elongate flat metal plate 30 having an upper face 31 and a lower face 32. At one end of the plate 30 the spigot 24 projects from the upper face 31 to pivotably couple the arm with the carriage body 12 as described. At the same end, the bearing spigot 22 projects from the lower face 32 to carry the bearing wheel 20. At the opposite end of the plate 30 the upper face 31 carries an upstanding flange 34 which extends longitudinally of the pivot arm. Approximately half way along its length the flange 34 contains a clearance hole 35 to receive a guide pin for the aforementioned bias element. The end of the flange which is closest to the spigot 24 is thickened at 36 to receive a screw-threaded through-bore 37 extending transversely of the arm 21.

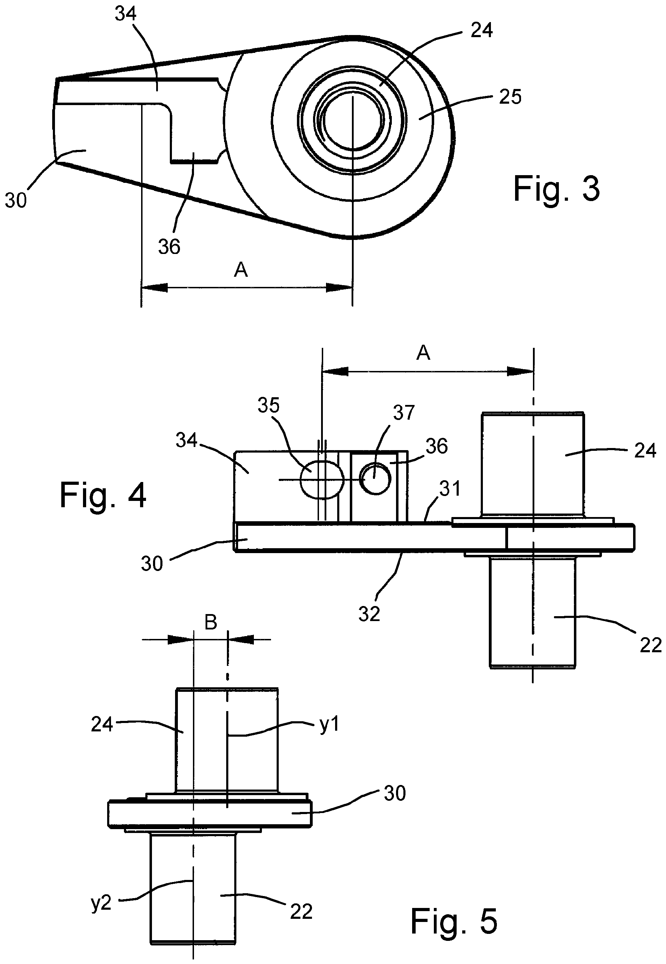

Considering the top and side views of the pivot arm, **Fig.s 3 and 4****,** the guide hole 35 for the bias spring is spaced from the central pivot axis of spigot 24 by a distance A in a first direction which extends longitudinally of the pivot arm. It can also be seen that, when viewed from the side of the pivot arm 30, the pivot axis of the spigot 24 coincides with the rotational axis of the bearing spigot 22. However, when the pivot arm is seen in end view as in **Fig. 5****,** the bearing spigot 22 is mounted eccentrically relative to the pivotal connection formed by the spigot 24, such that the pivot axis y1 of the spigot 24 is offset from the rotational axis y2 of the bearing spigot 22 by a distance B in a second direction which is transverse to, and more particularly, perpendicular to the first direction. Furthermore, the second direction is opposite to the direction in which the bias spring acts on the flange 34. It is also important that the eccentricity of the two spigots 22 and 24 is small relative to the distance A such that the pivot arm provides a substantial mechanical advantage, increasing the force applied by the bias spring by a factor of 10 or 20. Taking a specific example, if distance A is 25.0 mm and distance B is 4.0 mm the ratio of A to B would be 6.25: 1. To maintain a compact arrangement with sufficient spring force on the self-adjusting bearing wheel the distance A should be at least twice the distance B, preferably at least three times the distance B, and ideally at least five times the distance B. To maintain sufficient spring force, generally the distance A should fall within the range of five to twenty times the distance B, the smaller end of the range being appropriate for smaller, lightweight carriages which require a lighter pre-load and the high end of the range being suitable for larger, heavier carriages which require heaver pre-loading. Although it is generally desirable to achieve a good mechanical advantage it should be noted that the mechanical advantage should not generally be higher than the stated range. A higher mechanical advantage will reduce the range of bearing movement, and thus make the carriage less able to self-adjust to accommodate a wide range of track variations. An excessively high spring force will also increase the chances that the movable bearing will lock-up and fail to self-adjust.

**Fig.s 6-8** show the pivot arm 21 mounted in a three-bearing carriage similar to that shown in **Fig. 2****.** The pivot arm 21 and the bias element are arranged to extend over the top face of the track in use. The pivot arm 21 and bearing wheel 20 are shown in their nominal (floating) position when engaged with the track, with pressure exerted by the bias spring balanced by the reaction force between the bearing wheel and the track. In this configuration the carriage is able to self-adjust to differences in track width, which may occur at the junction between straight and curved sections and sometimes at other positions due to small variations in manufacturing tolerances within the transport system. It will be seen that the underside of the carriage body 12 contains a cavity 40 which receives the flange 34 of the pivot arm 21 with the plate 30 remaining below the carriage body. The spigot 24 and bush 25 are received in the aperture 28 to provide the pivotal connection, as described.

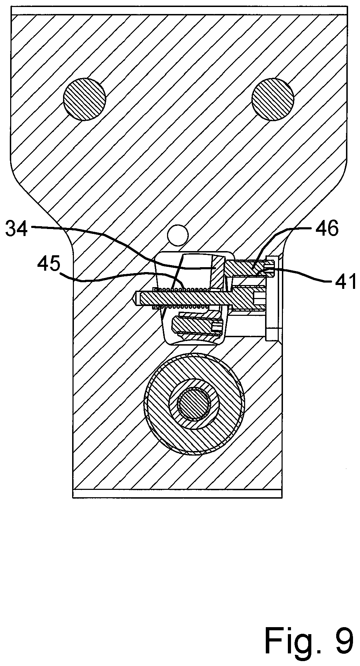

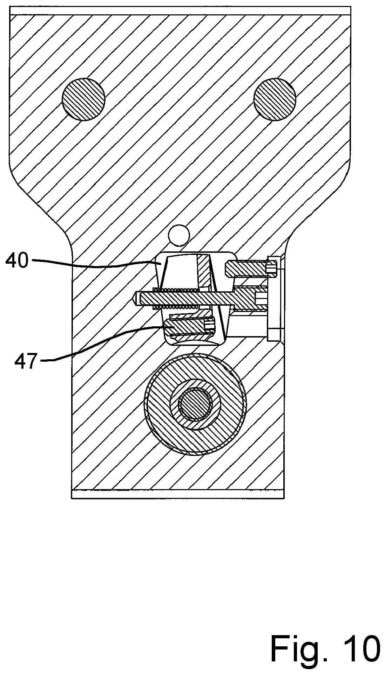

The cavity 40 communicates with three parallel bores 41-43 which exit through the side of the carriage body 12 which is opposite to the direction in which the bearing axis is offset. The middle bore 42 is screw-threaded and aligned with the clearance hole 35 in flange 34 enabling a partially screw-threaded guide pin 44 to be inserted through the flange. The guide pin carries a compression spring 45, which constitutes the bias element. The bias spring 45 is located in the cavity 40 acting between the flange 34 and the opposite wall of the cavity. The bore 41 which is farthest from the movable bearing wheel 20 is also threaded and receives a closing set screw 46 which contacts the flange 34 to set a limit position of the pivot arm under the action of spring 45, as shown in **Fig. 9****.** This set screw therefore determines the closest spacing between the bearing wheels in use. The third bore 43 which is closest to the movable bearing wheel 20 is non-threaded and is aligned with the threaded through-bore 37 in the flange 34 to provide access to an opening set screw 47 which is received in the bore 37. The opening set screw allows the maximum spacing between the bearing wheels to be determined by contacting the opposite wall of the cavity 40, as shown in **Fig. 10****.** The opening set screw 47 can be used to set a maximum limit of the bearing wheel 20 such that in the event of excess force being applied to the carriage which is sufficient to overcome the spring pressure in use, the carriage cannot become disengaged from the track.

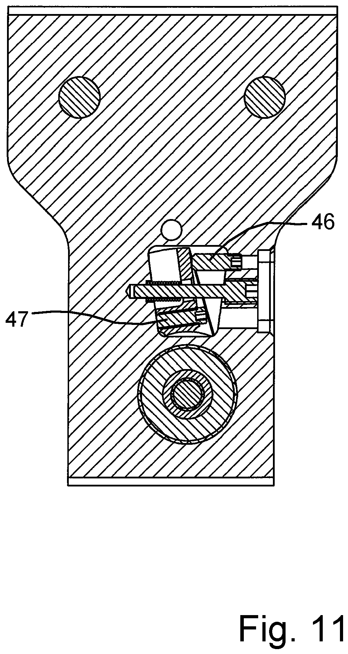

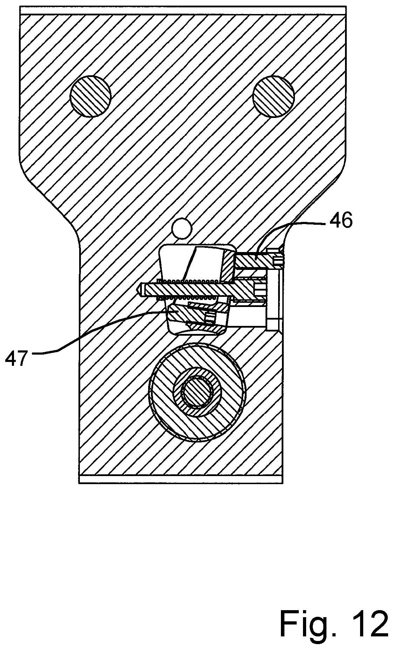

The closing set screw 46 which determines the minimum spacing between the fixed and self-adjusting bearing wheels, 15a, 15b and 20, can also be set for easier assembly of the carriage onto the track system by ensuring that the bearing wheels cannot close too much. Furthermore, if the two set screws 46 and 47 are adjusted to lock the bearing wheels in their fully-open configuration, as shown in **Fig. 11****,** the carriages can be placed onto the track quickly and easily without having to overcome the spring pressure. Conversely, adjusting the two set screws to lock the bearing wheels in the opposite fully-closed direction, as shown in **Fig. 12****,** would allow the carriages to be locked in position, e.g. to prevent movement during transportation.

The amount of spring pressure and hence the bearing pre-load is determined by the spring rate of the bias spring 45. By unscrewing the threaded guide pin 44 the spring can easily be changed through the bottom of the cavity 40 to allow different bearing pre-loads to suit specific applications.

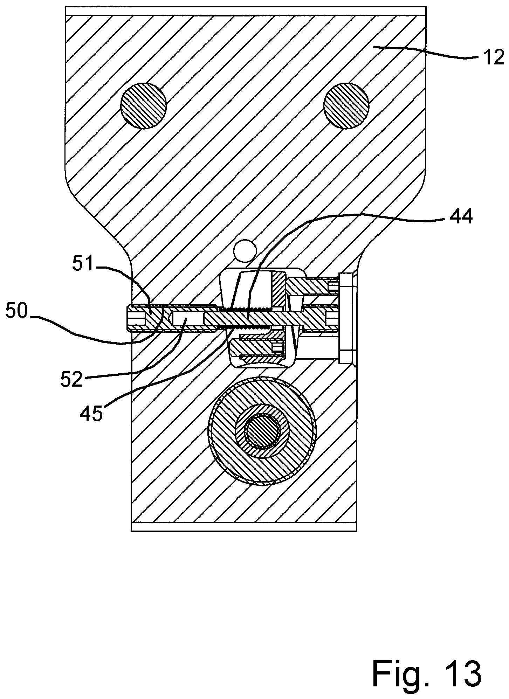

**Fig. 13** shows another way of setting the spring force. In this embodiment another screw-threaded bore 50 is provided in the opposite side of the carriage body 12 aligned with the guide pin 44. The bore 50 contains a loading set screw 51 which is counter-bored at 52 to receive the end of the guide pin 44. The bias spring 45 bears against the end of the set screw 51 instead of the wall of the cavity 40. The spring length and therefore the force exerted by the bias spring 45 can thus be adjusted using the loading set screw 51.

The set screws 41 and 43 which limit the movement of the arm 21 can also be used to allow a limit to be set on the range of pre-loads that the bearing can have during its journey around the transport system. Carriages with the self-adjusting bearing wheel arrangement described herein are very suitable to be used in conjunction with linear drive motors, which have a limited amount of driving force. Being able to limit the amount of pre-load allows the amount of force required to move the carriage to be limited, which may be useful in some circumstances.

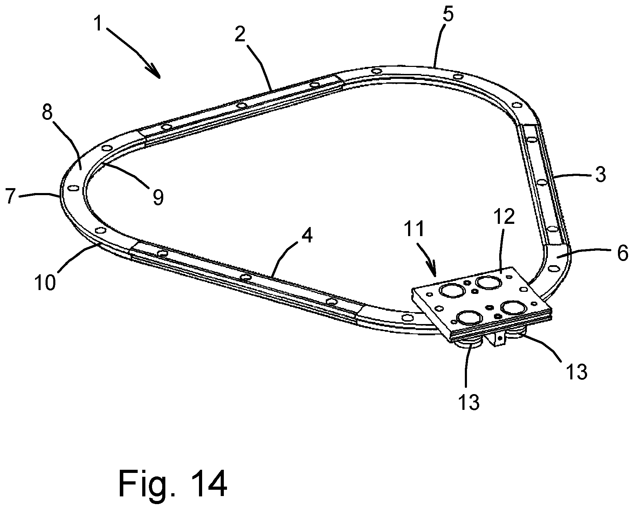

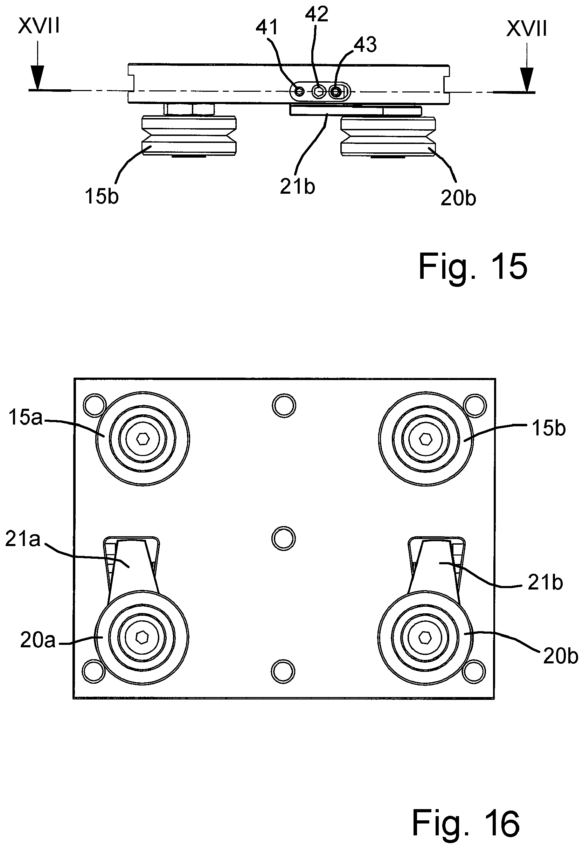

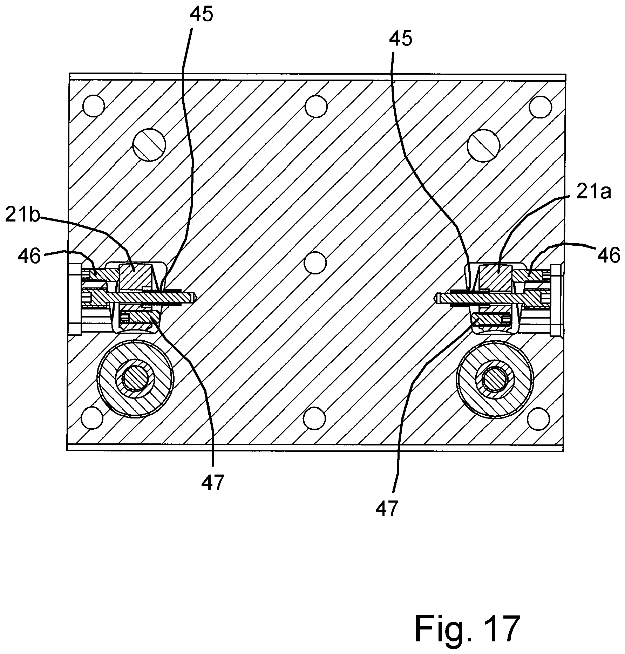

The carriage should have a fixed side and self-adjusting side irrespective of the number of bearing wheels. On the fixed side the positions of all the bearing wheels are fixed, but on the opposite side the position of all the bearing wheels should be adjustable using the pivot arm arrangement described. **Fig.s 14-17** show how this can be applied to a four-bearing carriage. **Fig. 14****,** shows a transport system with another simple layout for convenience of illustration. An endless track 1 is shown which includes both straight sections 2, 3 and 4 and curved sections 5, 6 and 7. The track has a top face 8 and opposite first and second sides 9 and 10. The width of the track between the sides 9 and 10 may be constant throughout the straight and curved sections or it may vary as discussed herein. The transport system includes at least one a carriage 11, which in this example is a four-bearing carriage having a carriage body 12 and four bearing wheels 13. The carriage body 12 extends across the top face 8 of the track and the bearing wheels 13 are engaged with suitable profiles formed on the first and second sides 9 and 10. Triangular-section profiles are generally used, but others are possible. The carriage body 12 projects by substantially the same distance on opposite sides of the track. In the drawing the track 1 is shown in a horizontal orientation, but, depending on the use, at least part of the track could be arranged in a vertical plane. Referring to **Fig.s 15-17****,** the bearing wheels 15a and 15b are again fixed in position on the carriage 11 but on the opposite side of the carriage the bearing wheels 20a and 20b are mounted on respective pivot arms 21a and 21b. The arrangement of the pivot arms with their respective bias springs 45 and set screws 46 and 47 are as described in relation to **Fig.s 3-8****,** but in this case the two pivot arms 21a and 21b are of opposite hands, one being a mirror image of the other. The pivot arms must therefore move in opposite senses to move the bearing wheels towards or away from the fixed pair. This is done to enable the set screws and guide pin to be accessed from the adjacent ends of the carriage in both cases. The four bearing wheels are set at centres of a trapezium such that the pivot arms 21a and 21b and bearing wheels 20a and 20b are in their nominal (floating) position when engaged with the track as shown in **Fig. 16****,** with pressure exerted by the bias springs 45 being balanced by the reaction forces between the bearing wheels and the track. Note that the set screws 46 and 47 are shown in a locked position in **Fig. 17****,** but in use they would be adjusted to set the required limits of movement of the pivot arms under the action of the bias springs 45. The position of the self-adjusting bearing wheels 20a and 20b can adjust to compensate for any loosening that would occur in a fixed centre four-bearing carriage at the junction between straight and curves sections, so greatly improving the stability of the carriage at those points in the system.

The bias springs can be changed through the bottom of the carriage to allow different bearing wheel pre-loads as required.

It will thus be appreciated that the embodiments described allow the position of the bearings to be continually altered around the entire transport system, including the joints between straight and curved sections, and hence maintains the dimension stability of the carriage. The carriages do not require accurate individual adjustment to take account of initial manufacturing tolerances, nor do they require periodic adjustment to take account of wear. This is achieved without adversely affecting the size and balance of the carriages. Furthermore, a number of useful adjustments are provided:
- An adjustable set screw can be used to put a physical hard stop on the innermost adjusted position of the bearing wheel(s). This can prevent the wheels from closing down too much, therefore making it easy to engage a carriage onto the slide/track without having to excessively spring out the wheels.
- An adjustable set screw can be used to put a physical hard stop on the outermost adjusted position of the bearing wheel (s). In the event that applied load exceeds the pre-load, then this stop prevents the bearings from moving outwards too much and thus risking the carriage from disengaging from the track.
- The spring may be changed for one of different stiffness, depending on what level of pre-load and range of adjustment is required.
- The bias spring may be backed by an adjustable set screw. If this is moved, then the pre-load of the mover can be adjusted within limits.

It should be noted that with the present transport system drive would not be transmitted to the carriage via the self-adjusting bearings. The self-adjusting bearings could be used in a rack driven carriage for example but the drive would be transmitted through a pinion running on a rack or gear which would be positioned adjacent to the fixed bearings.

Although bearings in the form of bearing wheels have been described herein the invention would be applicable to other forms of bearing such as rollers.

## Claims

1. A transport system, including:
a track (1) having a top face (8) and opposite first and second sides (9, 10); a carriage (11) having a carriage body (12) to extend across the top face of the track, a fixed bearing arrangement (14) which includes a bearing (15a, 15b) to engage the first side of the track and having a rotational axis located in a fixed position on the carriage body, and a self-adjusting bearing arrangement (19) which includes a movable bearing (20) to engage the second side of the track and mounted on a pivot arm (21) having a pivotal connection (24, 25) with the carriage body and a bias element (45) arranged to act on the pivot arm such as to maintain contact between the movable bearing and the second side of the track;
wherein the self-adjusting bearing arrangement (19) is such that
- the movable bearing (20) is not driven;
- the movable bearing (20) and the pivotal connection (24, 25) of the pivot arm (21) are both located at a first end of the pivot arm;
- the bias element (45) is spaced from the pivotal connection (24, 25) of the pivot arm (21) in a first direction;
- the movable bearing (20) is offset from the pivotal connection (24, 25) in a second direction which is transverse to the first direction.

2. A transport system according to claim 1 wherein the second direction is substantially orthogonal to the first direction.

3. A transport system according to claim 1 or 2 wherein the bias element (45) acts to urge the pivot arm (21) in a direction which is opposite to the direction in which the movable bearing (20) is offset from the pivotal connection (25, 25).

4. A transport system according to claim 1, 2 or 3 wherein the pivot arm (21) and the bias element (45) extend over the top face (8) of the track.

5. A transport system according to any preceding claim wherein the bias element (45) is contained within a cavity (40) in the carriage body (12).

6. A transport system according to any preceding claim wherein the distance A between the bias element (45) and the pivot axis (y1) of the pivot arm (21) is greater than the distance B between the rotation axis (y2) of the bearing (20) and the pivot axis (y1).

7. A transport system according to any preceding claim wherein the pivot arm (21) has upper and lower faces (31, 32) with a pivot spigot (24) projecting from the upper face and a bearing spigot (22) projecting from the lower face.

8. A transport system according to claim 7 wherein the upper face of the pivot arm carries an upstanding flange (34).

9. A transport system according to claim 8 wherein the bias element (45) acts against the flange (34).

10. A transport system according to any preceding claim wherein an adjustable closing stop (46) is provided to limit pivotal movement of the movable bearing (20) towards the fixed bearing arrangement (14).

11. A transport system according to any preceding claim wherein an adjustable opening stop (47) provided to limit pivotal movement of the movable bearing (20) away from the fixed bearing arrangement (14).

12. A transport system according to any preceding claim wherein the bias element (45) is positioned on the same side of the pivot arm (21) as the movable bearing (20).

13. A transport system according to any preceding claim wherein the bias element (45) acts against an adjustable stop (51) to vary the pre-loading of the bias element.

14. A transport system according to any preceding claim wherein the self-adjusting bearing arrangement (19) includes a single movable bearing (20) mounted on a pivot arm (21) with a bias element (45).

15. A transport system according to any of claims 1 to 13 wherein the self-adjusting bearing arrangement (19) includes a pair of movable bearings (20a, 20b) mounted on respective pivot arms (21a, 21b) with respective bias elements (45).

## Patentansprüche

1. Ein Transportsystem, einschließlich:
eine Spur (1) mit einer Oberseite (8) und gegenüberliegender ersten und zweiten Seite (9, 10); ein Wagen (11) mit einem Wagenkasten (12), der sich über die Oberseite des Gleises erstreckt, eine feste Lageranordnung (14), die eine Lagerung (15a, 15b) zum Einrasten der ersten Seite der Schiene umfasst und eine Drehachse aufweist, die sich in einer festen Position auf dem Wagenkasten befindet, und eine selbsteinstellende Lageranordnung (19), die ein bewegliches Lager (20) zum Einrasten der zweiten Seite der Schiene umfasst und auf einem Drehpunkt montiert ist Arm (21) mit einer Dreh- und Angelverbindung (24, 25) mit dem Wagenkasten und einem Vorspannungselement (45), das so angeordnet ist, dass es auf den Dreharm wirkt, um den Kontakt zwischen dem beweglichen Lager und der zweiten Seite der Spur aufrechtzuerhalten;
wobei die selbstnachstellende Lageranordnung (19) so ist, dass
- das bewegliche Lager (20) nicht angetrieben wird;
- das bewegliche Lager (20) und die Drehverbindung (24, 25) des Schwenkarms (21) befinden sich beide an einem ersten Ende des Schwenkarms;
- Das Bias-Element (45) ist von der Dreh- und Angelverbindung (24, 25) des Dreharms (21) in eine erste Richtung angeordnet;
- das bewegliche Lager (20) ist von der Dreh- und Angelverbindung (24, 25) in eine zweite Richtung versetzt, die quer zur ersten Richtung verläuft.

2. Transportsystem nach Anspruch 1, wobei die zweite Richtung im Wesentlichen orthogonal zur ersten Richtung ist.

3. Transportsystem nach Anspruch 1 oder 2, wobei das Bias-Element (45) wirkt, um den Schwenkarm (21) in eine Richtung zu drängen, die entgegengesetzt zu der Richtung ist, in der das bewegliche Lager (20) von der Drehverbindung (25, 25) versetzt ist.

4. Transportsystem nach Anspruch 1, 2 oder 3, wobei sich der Schwenkarm (21) und das Bias-Element (45) über die Oberseite (8) der Schiene erstrecken.

5. Transportsystem nach einem vorhergehenden Anspruch, bei dem das Bias-Element (45) in einem Hohlraum (40) im Wagenkörper (12) enthalten ist.

6. Transportsystem nach einem beliebigen vorhergehenden Anspruch, wobei der Abstand A zwischen dem Vorspannungselement (45) und der Drehachse (y1) des Schwenkarms (21) größer ist als der Abstand B zwischen der Drehachse (y2) des Lagers (20) und der Drehachse (y1).

7. Transportsystem nach einem vorhergehenden Anspruch, wobei der Dreharm (21) die Ober- und Unterseite (31, 32) aufweist, wobei ein Drehzapfen (24) von der Oberseite und ein Lagerzapfen (22) von der Unterseite absteht.

8. Transportsystem nach Anspruch 7, wobei die Oberseite des Dreharms einen aufrechten Flansch (34) trägt.

9. Transportsystem nach Anspruch 8, wobei das Bias-Element (45) gegen den Flansch (34) wirkt.

10. Transportsystem nach einem vorhergehenden Anspruch, bei dem ein verstellbarer Schließanschlag (46) vorgesehen ist, um die Drehbewegung des beweglichen Lagers (20) in Richtung der festen Lageranordnung (14) zu begrenzen.

11. Transportsystem nach einem vorhergehenden Anspruch, bei dem ein verstellbarer Öffnungsanschlag (47) vorgesehen ist, um die Drehbewegung des beweglichen Lagers (20) weg von der festen Lageranordnung (14) zu begrenzen.

12. Transportsystem nach einem vorhergehenden Anspruch, bei dem das Bias-Element (45) auf derselben Seite des Schwenkarms (21) wie das bewegliche Lager (20) positioniert ist.

13. Transportsystem nach einem beliebigen vorhergehenden Anspruch, bei dem das Bias-Element (45) gegen einen einstellbaren Anschlag (51) wirkt, um das Vorladen des Bias-Elements zu variieren.

14. Transportsystem nach einem vorhergehenden Anspruch, wobei die selbsteinstellende Lageranordnung (19) ein einzelnes bewegliches Lager (20) umfasst, das auf einem Schwenkarm (21) mit einem Vorspannungselement (45) montiert ist.

15. Transportsystem nach einem der Ansprüche 1 bis 13, wobei die selbsteinstellende Lageranordnung (19) ein Paar beweglicher Lager (20a, 20b) umfasst, die auf jeweiligen Schwenkarmen (21a, 21b) mit entsprechenden Vorspannungselementen (45) montiert sind.

## Revendications

1. Un système de transport, comprenant:
une piste (1) ayant une face supérieure (8) et opposée aux première et deuxième faces (9, 10); un chariot (11) ayant un corps de chariot (12) pour s'étendre sur la face supérieure de la voie, un roulement fixe (14) qui comprend un roulement (15a, 15b) pour engager le premier côté de la voie et ayant un axe de rotation situé en position fixe sur la caisse du chariot, et un roulement autoréglable (19) qui comprend un roulement mobile (20) pour engager le deuxième côté de la voie et monté sur un pivot bras (21) ayant une connexion pivotante (24, 25) avec le corps du chariot et un élément de polarisation (45) disposé pour agir sur le bras pivotant de manière à maintenir le contact entre le roulement mobile et le deuxième côté de la voie;
dans laquelle la disposition des roulements auto-réglables (19) est telle que
- le roulement mobile (20) n'est pas entraîné;
- le roulement mobile (20) et la connexion pivotante (24, 25) du bras pivotant (21) sont tous deux situés à une première extrémité du bras pivotant;
- l'élément de polarisation (45) est espacé de la connexion pivotante (24, 25) du bras pivotant (21) dans une première direction;
- le roulement mobile (20) est décalé par rapport à la connexion pivotante (24, 25) dans une seconde direction transversale à la première direction.

2. Système de transport selon la revendication 1 dans lequel la seconde direction est sensiblement orthogonale à la première direction.

3. Système de transport selon la revendication 1 ou 2 dans lequel l'élément de polarisation (45) agit pour pousser le bras de pivot (21) dans une direction opposée à la direction dans laquelle le roulement mobile (20) est décalé par rapport à la connexion pivotante (25, 25).

4. Système de transport selon la revendication 1, 2 ou 3 dans lequel le bras pivotant (21) et l'élément de polarisation (45) s'étendent sur la face supérieure (8) de la voie.

5. Système de transport selon l'une quelconque des revendications précédentes dans lequel l'élément de polarisation (45) est contenu dans une cavité (40) de la caisse de transport (12).

6. Système de transport selon l'une quelconque des revendications précédentes dans lequel la distance A entre l'élément de polarisation (45) et l'axe de pivot (y1) du bras pivotant (21) est supérieure à la distance B entre l'axe de rotation (y2) du roulement (20) et l'axe de pivot (y1).

7. Système de transport selon l'une quelconque des revendications précédentes dans lequel le bras pivotant (21) présente des faces supérieure et inférieure (31, 32) avec un robinet pivotant (24) faisant saillie à partir de la face supérieure et un robinet porteur (22) faisant saillie à partir de la face inférieure.

8. Système de transport selon la revendication 7 dans lequel la face supérieure du bras pivotant porte une bride debout (34).

9. Système de transport selon la revendication 8 dans lequel l'élément de polarisation (45) agit contre la bride (34).

10. Système de transport selon l'une quelconque des revendications précédentes dans lequel une butée de fermeture réglable (46) est prévue pour limiter le mouvement pivotant du roulement mobile (20) vers le montage du roulement fixe (14).

11. Système de transport selon l'une quelconque des revendications précédentes dans lequel une butée d'ouverture réglable (47) est prévue pour limiter le mouvement pivotant du roulement mobile (20) loin de la disposition fixe des roulements (14).

12. Système de transport selon l'une quelconque des revendications précédentes dans lequel l'élément de polarisation (45) est positionné du même côté du bras pivotant (21) que le roulement mobile (20).

13. Système de transport selon l'une quelconque des revendications précédentes dans lequel l'élément de polarisation (45) agit contre une butée réglable (51) pour faire varier la précharge de l'élément de polarisation.

14. Système de transport selon l'une quelconque des revendications précédentes dans lequel la disposition des roulements autoréglables (19) comprend un seul roulement mobile (20) monté sur un bras pivotant (21) avec un élément de polarisation (45).

15. Système de transport selon l'une quelconque des revendications 1 à 13 dans lequel la disposition des roulements auto-réglables (19) comprend une paire de roulements mobiles (20a, 20b) montés sur les bras de pivot respectifs (21a, 21b) avec les éléments de polarisation respectifs (45).
